# EUROPÄISCHE PATENTANMELDUNG

(11) **EP 3 785 886 A1**
(43) Veröffentlichungstag der Anmeldung: **03.03.2021**
(21) Anmeldenummer: 20173909.1
(22) Anmeldetag: 21.07.2017
(51) Int. Cl.: B29C 65/02, B65B 39/08, B65B 3/00, B65D 75/58, A61J 1/10, A61J 1/14

(54) **SCHWEISSWERKZEUG, BEUTEL, ANLAGE ZUM HERSTELLEN UND BEFÜLLEN EINES BEUTELS SOWIE VERFAHREN ZUM BEFÜLLEN EINES BEUTELS**

(30) Priorität: 26.08.2016 DE 102016010247; 20.04.2017 DE 102017003802; 20.07.2017 DE 102017006886
(62) Teilanmeldung aus: 17764754.2
(71) Anmelder: KIEFEL GmbH, 83395 Freilassing (DE)
(72) Erfinder: Klein, Martin, 5400 Hallein (AT); Gschwendtner, Rupert, 83435 Bad Reichenhall (DE); Haas, Johann, 5203 Köstendorf (AT)
(74) Vertreter: FARAGO Patentanwälte

(57) **Zusammenfassung**

Die Erfindung betrifft ein Schweißwerkzeug zum luftdichten Verschweißen einer Öffnung (6, 26, 52) eines Beutels (2, 22, 42, 50, 71, 80) für medizinische Zwecke, wobei das Schweißwerkzeug eine Schweißelektrode aufweist, wobei die Schweißelektrode ein Oberflächenrelief aufweist, sowie eine Anlage mit einem solchen Schweißwerkzeug, eine mit einem solchen Schweißwerkzeug verschlossenen Beutel (2, 22, 42, 50, 71, 80) und einem Verfahren zum Befüllen eines solchen Beutels (2, 22, 42, 50, 71, 80) unter Verwendung eines solchen Schweißwerkzeugs.

## Beschreibung

### Gebiet der Erfindung

Die Erfindung betrifft ein Schweißwerkzeug zum luftdichten Verschweißen einer Öffnung eines Beutels für medizinische Zwecke, einen damit verschlossenen Beutel, eine Anlage zum Herstellung und Befüllen eines solchen Beutels und ein Verfahren zum Befüllen eines solchen Beutels.

### Hintergrund der Erfindung

Der Herstellung von Beuteln, welche schließlich als Medizinprodukte Verwendung finden, kommt eine immer breitere Aufmerksamkeit zu.

Der Stand der Technik kennt unterschiedliche Herstellungsverfahren für derartige Beutel.

Ein sehr gängiges Beispiel zeigt die WO 2007/140 760 A2. Dort werden Beutel hergestellt, die ein Anschlussteil zum Befüllen und/oder Entleeren des Beutels aufweisen und welche schließlich insbesondere als Medizinprodukte Verwendung finden. Zum Herstellen des benötigten Ausflussteils am Beutel wird ein schlauchförmiges Anschlussteil zwischen zwei Folien eingeschweißt. Hierzu wird das schlauchförmige Anschlussteil an einer Mandrene, auch Zentralelektrode genannt, angeordnet. Die Folien werden eben oberhalb und unterhalb des Anschlussteils angeordnet. Dann fährt ein Werkzeug an die Folien heran, legt diese bei weiterem Zusammenfahren von Ober- und Unterwerkzeug flächig in einem Verbindungsbereich um das Anschlussteil herum, bis sich die Folien neben dem Verbindungsbereich aneinander anlegen. Sodann wird einerseits eine Schweißverbindung zwischen dem Anschlussteil und den Folien, andererseits außerhalb des Verbindungsbereichs zwischen den Folien direkt hergestellt.

Die WO 2010/025699 A1 offenbart eine Vorrichtung zum Verschweißen eines Verbindungsbereichs einer Folie mit einem Anschlussteil, insbesondere zweier Folien mit einem schlauchförmigen Anschlussteil, wobei in einem ersten Schritt kontrolliert eine Verlängerung der Folie außerhalb des Verbindungsbereiches hervorgerufen wird, sodass die Folie über eine Längenreserve verfügt, welche im zweiten Schritt beim Verschweißen einer unkontrollierten Schwächung der Folie im Bereich des Anschlussteils entgegenwirkt.

### Zusammenfassung der Erfindung

Der Erfindung liegt die Aufgabe zugrunde, dem Stand der Technik eine Verbesserung oder eine Alternative zur Verfügung zu stellen.

Nach einem Aspekt der Erfindung löst die Aufgabe ein Schweißwerkzeug zum luftdichten Verschweißen einer Öffnung eines Beutels, insbesondere eines Beutels, der mit einem Beutelkonturschweißgerät hergestellt wurde, und/oder eines Beutels, der mit einer Vorrichtung befüllt wurde, wobei das Schweißwerkzeug eine Schweißelektrode aufweist, wobei die Schweißelektrode ein Oberflächenrelief aufweist.

Die Vorrichtung kann eine Klemme mit zwei Klemmbacken und eine Füllnadel aufweisen, wobei die Klemme dazu eingerichtet ist den Beutel zwischen der Füllnadel und den Klemmbacken einzuklemmen.

### Begrifflich sei hierzu Folgendes erläutert:

Zunächst sei ausdrücklich darauf hingewiesen, dass im Rahmen der hier vorliegenden Patentanmeldung unbestimmte Artikel und Zahlenangaben wie "ein", "zwei" usw. im Regelfall als "mindestens"-Angaben zu verstehen sein sollen, also als "mindestens ein...", "mindestens zwei ..." usw., sofern sich nicht aus dem jeweiligen Kontext ausdrücklich ergibt oder es für den Fachmann offensichtlich oder technisch zwingend ist, dass dort nur "genau ein ...", "genau zwei..." usw. gemeint sein können.

Ein "Beutel" ist ein hohler, dünnwandiger, leicht verformbarer Gegenstand, der zur Aufnahme von anderen Gegenständen, insbesondere Flüssigkeiten, geeignet ist. Ein Beutel kann ein offener oder ein geschlossener Beutel sein.

Eine "Klemme" sichert ein Bauteil gegen ein Verschieben und/oder ein Rotieren. Eine Klemme weist zwei Klemmbacken auf, die relativ zueinander durch das Betätigen der Klemme bewegt werden können. Dabei ist die Klemme dazu eingerichtet mindestens zwei Positionen einnehmen zu können. Eine erste Position ist die Halteposition, in welcher das zu fixierende Bauteil gehalten wird, sodass es in dem eingeklemmten Bereich des Bauteils weder verschoben noch rotiert werden können soll. In einer zweiten Position der Öffnungsposition wird das zu fixierende Bauteil nicht gehalten, sodass es in die Klemme eingeführt, justiert und ausgeführt werden kann.

Eine "Klemmbacke" ist ein Bauteil einer Klemme. Das von der Klemme zu fixierende Bauteil wird von einer Klemmbacke in der Halteposition berührt und im Zusammenspiel mit einer weiteren Klemmbacke fixiert.

Eine "Füllnadel" ist ein von einer Bohrung durchdrungener Körper. Die Füllnadel ist dazu eingerichtet in eine Öffnung eingeführt und von einem Stoff durch ihre Bohrung durchströmt zu werden. Insbesondere soll unter einer Füllnadel ein Körper verstanden werden, der dazu eingerichtet ist in einer Öffnung eines Beutels befindlich zu sein und diesen durch die Bohrung im inneren der Füllnadel zu befüllen.

Der Stand der Technik sah bislang vor, dass Beutel, insbesondere Beutel für medizinische Zwecke, mittels eines Füllports befüllt werden. Dieser Füllport ist ein spezifisches Einsetzteil, welches so mit dem Beutel verbunden ist, dass es nicht entfernt werden kann. Insbesondere handelt es sich bei einem solchen Füllport um ein zunächst separates Bauteil, welches am Rand des Beutels in den Beutel eingeschweißt und so mit ihm fest verbunden ist.

Die WO 2007/140 760 A2 sowie die WO 2010/025699 A1 ofenbaren jeweils Vorrichtungen und Verfahren zum Einschweißen eines solchen Füllports in einen Beutel.

Abweichend wird hier vorgeschlagen, einen Beutel nicht mehr mit einem Füllport zu befüllen, welcher als separates Bauteil in einen Beutel eingeschweißt ist.

So wird hier konkret vorgeschlagen einen Beutel durch eine Öffnung im Beutel zu befüllen, welche dadurch besteht, dass der Beutel nicht vollständig umlaufend verschweißt ist, sondern eine Aussparung in einer nahezu umlaufenden Verschweißung aufweist.

Bei geeigneter Gestaltung dieser Aussparung kann eine Füllnadel im Bereich der Aussparung zwischen die den Beutel bildenden Folien oder Begrenzungswände eingeführt werden, sodass die Füllnadel einen Zugang zum Inneren des Beutels erhält. In einem zweiten Schritt wird der Beutel durch eine Klemme gegen die Füllnadel gespannt, sodass der Beutel nicht mehr von der Füllnadel abrutschen kann. Anschließend kann der Beutel durch die mit einer Bohrung durchdrungene Füllnadel befüllt werden.

So kann die Klemme den Beutel durch Form und Gegenform so gegen die Füllnadel klemmen, dass der Beutel mit Ausnahme der Bohrung im Inneren der Füllnadel dicht abgeschlossen ist.

Es ist denkbar, dass die Klemme im Zusammenspiel mit der Füllnadel und dem Beutel so dimensioniert und ausgelegt ist, dass der Beutel selbst als Dichtung zwischen der Klemme und dem Beutel fungiert.

Bei besonders geeigneter Gestaltung von Klemme und Füllnadel bildet sich ein Formschluss zwischen der Klemme und der Füllnadel oder zwischen der Klemme und dem Beutel und zwischen dem Beutel und der Füllnadel aus.

In einer geeigneten Ausführungsform kann es beim Einklemmen des Beutels zwischen der Klemme und der Füllnadel zu einer elastischen/oder plastischen Verformung des Beutels im Bereich der Beutelöffnung und/oder im Bereich der Klemmung kommen, wodurch die Eigenschaften der Klemme noch verbessert werden können. Eine solche Eigenschaft ist die Dichtheit der Klemmung, welche durch eine spezielle Formgebung der Dichtflächen an den Klemmbacken und/oder der Füllnadel verbessert werden kann.

Vorteilhaft kann erreicht werden, dass Beutel keinen Füllport mehr aufweisen müssen, um befüllt werden zu können. So können Material, Kosten und Verarbeitungszeit eingespart werden.

Ein weiterer Vorteil kann darin bestehen, dass die leeren Beutel ein geringeres Packmaß aufweisen, wodurch sich die Logistik der Beutel optimieren lässt.

Auch bei der Entsorgung eines Beutels kann sich vorteilhaft ein geringeres Entsorgungsvolumen ergeben, sodass die Umwelt weniger beeinträchtigt wird.

Vorteilhaft kann hierdurch ebenfalls erreicht werden, dass der Beutel beim Befüllen ein höheres Maß an Dichtheit aufweisen kann, sodass insbesondere weniger Luft in den befüllten Beutel eingeschlossen wird, wodurch sich das Packmaß befüllter Beutel optimieren lässt.

Bevorzugt weisen die Klemme und die Füllnadel einen Formschluss zueinander auf.

So bildet sich bei besonders geeigneter Gestaltung von Klemme und Füllnadel ein Formschluss zwischen der Klemme und der Füllnadel oder zwischen der Klemme und dem Beutel und zwischen dem Beutel und der Füllnadel aus.

Vorteilhaft kann hierdurch erreicht werden, dass die Dichtheit der Klemmverbindung zwischen der Klemme und der Füllnadel oder zwischen der Klemme und dem Beutel und zwischen dem Beutel und der Füllnadel verbessert werden kann.

Optional weist der Formschluss eine konische Kontaktfläche auf.

### Begrifflich sei hierzu Folgendes erläutert:

Eine "Kontaktfläche" ist eine Berührungsfläche zwischen Körpern.

Eine "konische Kontaktfläche" ist eine Berührungsfläche zwischen Körpern, wobei die Kontaktfläche konisch gestaltet ist, insbesondere frustrokonisch.

Vorteilhaft kann hierdurch erreicht werden, dass durch die konische Form der Füllnadel diese besser und schneller durch die Öffnung im Beutel eingeführt werden kann, wodurch dieser Anteil der Prozesszeit reduziert werden kann.

Auch kann sich durch die konische Form der Kontaktfläche zwischen der Klemme und der Füllnadel oder zwischen der Klemme und dem Beutel und zwischen dem Beutel und der Füllnadel vorteilhaft erreicht werden, dass die Dichtheit der Klemmverbindung verbessert werden kann. Als Folge daraus kann sich ergeben, dass insbesondere weniger Luft in den befüllten Beutel eingeschlossen wird, wodurch sich das Packmaß befüllter Beutel optimieren lässt.

Bevorzugt weist der Formschluss eine Mehrzahl an Kontaktflächen auf.

So ist beispielsweise denkbar, dass der Formschluss mehrere Kontaktflächen aufweist, die durch eine Abstufung miteinander verbunden sind.

Weiter ist denkbar, dass der Formschluss mittels mehrerer Kontaktflächen einen Konus und einen gegenläufigen Konus aufweist.

Vorteilhaft kann hierdurch erreicht werden, dass die Dichtheit zwischen der Klemme und der Füllnadel oder zwischen der Klemme und dem Beutel und zwischen dem Beutel und der Füllnadel vorteilhaft verbessert werden kann, sodass insbesondere weniger Luft in den befüllten Beutel eingeschlossen wird, wodurch sich das Packmaß befüllter Beutel optimieren lässt.

Optional weist der Formschluss eine Rille auf.

So kann der Formschluss mit einer umlaufenden Dichtrille versehen sein.

In dieser Dichtrille kann ein zusätzliches Dichtelement eingebracht werden.

Zudem kann die Dichtrille im Sinne einer Nut und Feder Verbindung den Formschuss weiter verbessern.

Vorteilhaft kann hierdurch erreicht werden, dass die Dichtheit zwischen der Klemme und der Füllnadel oder zwischen der Klemme und dem Beutel und zwischen dem Beutel und der Füllnadel vorteilhaft verbessert werden kann, sodass insbesondere weniger Luft in den befüllten Beutel eingeschlossen wird, wodurch sich das Packmaß befüllter Beutel optimieren lässt.

Bevorzugt ist der Formschluss dazu eingerichtet luftdicht zwischen Klemmbacken und Füllnadel abzuschließen.

Optional ist der Formschluss dazu eingerichtet den Beutel luftdicht zwischen Klemmbacken und Füllnadel einzuklemmen.

Vorteilhaft kann hierdurch erreicht werden, dass weniger Luft in den befüllten Beutel eingeschlossen wird, wodurch sich das Packmaß befüllter Beutel optimieren lässt, wodurch die Logistik befüllter Beutel optimiert werden kann.

Bevorzugt weist die Klemme einen Elastomer auf.

### Begrifflich sei hierzu Folgendes erläutert:

Ein "Elastomer" ist ein formfester aber elastisch verformbarer Kunststoff. Er kann sich bei Zug- oder Druckbelastung elastisch verformen, findet jedoch nach der Wegnahme der Last wieder in die ursprüngliche unverformte Gestalt zurück.

So ist in einer vorteilhaften Ausführungsform beispielsweise denkbar, dass die Klemme und/oder eine Klemmbacke und/oder beide Klemmbacken und/oder ein Teil einer Klemmbacke und/oder ein Teil beider Klemmbacken aus einem Elastomer besteht.

Vorteilhaft kann hierdurch erreicht werden, dass durch die Wirkweise eines Elastomers die Abdichtung zwischen der Klemmbacke und der Folie und/oder die Abdichtung zwischen der ersten Klemmbacke und der zweiten Klemmbacke und/oder die Abdichtung zwischen der ersten Klemmbacke und der ersten Folie und/oder die Abdichtung zwischen der ersten Folie und der zweiten Folie und/oder die Abdichtung zwischen der zweiten Folie und der zweiten Klemmbacke und/oder die Abdichtung zwischen der Klemmbacke und der Folie und/oder die Abdichtung zwischen der Klemmbacke und der Füllnadel verbessert werden kann.

Ein Beutelkonturschweißwerkzeug zum Verschweißen einer Folie zu einem offenen Beutel kann zwischen zwei Kopflinien eine Aussparung aufweisen.

### Begrifflich sei hierzu Folgendes erläutert:

Ein "Beutelkonturschweißwerkzeug" ist ein Werkzeug zum Herstellen eines offenen oder geschlossenen Beutels, welches dazu eingerichtet ist einen Beutel an seinen Kanten zu verschweißen und damit eine Naht zwischen den beiden begrenzenden Wänden herzustellen.

Eine "Folie" bezeichnet insbesondere ein dünnes Kunststoffblatt.

Ein "offener Beutel" ist ein Beutel, der zumindest an einer Stelle eine Öffnung aufweist, durch die ein Gegenstand, insbesondere eine Flüssigkeit, aufgenommen oder abgegeben werden kann.

Eine "Kopflinie" ist eine Linie einer Schweißnaht, die mit einem Schweißwerkzeug hergestellt worden ist und am Kopf eines Beutels verläuft, wobei der Kopf eines Beutels die obere Kante eines aufrecht stehend oder hängend positionierten Beutels darstellt, insbesondere eines offenen Beutels dessen Öffnung oben ist. Ist ein Beutel oben offen, so ist die Kopflinie durch die Öffnung zumeist geteilt, so dass es zwei Kopflinien geben kann, insbesondere eine Kopflinie rechts der Öffnung und eine Kopflinie links der Öffnung.

Eine "Aussparung" ist eine Unterbrechung einer Schweißnaht. Insbesondere kann ein offener Beutel eine Aussparung aufweisen, wodurch die Öffnung des Beutels zum Inneren des Beutels erreicht wird.

So ist konkret unter anderem denkbar, dass ein offener Beutel mit einem Beutelkonturschweißwerkzeug aus einer Folie hergestellt wird, wobei der Beutel eine Öffnung aufweist, die durch eine Unterbrechung oder Aussparung einer Konturschweißlinie entstanden ist.

Körperhaft bedeutet dies, dass das Beutelkonturschweißwerkzeug bei geeigneter Gestaltung eine Aussparung aufweist.

So kann mit einem besonders geeignet gestalteten Beutelkonturschweißgerät auf einen Füllport oder ein anderes Einsetzstück zum Befüllen des Beutels verzichtet werden.

Vorteilhaft kann erreicht werden, dass offene Beutel kostengünstig und einfach hergestellt werden können. So können die Durchlaufzeiten in einer entsprechenden Anlage vorteilhaft reduziert werden.

Ein weiterer Vorteil kann darin bestehen, dass die leeren Beutel ein geringeres Packmaß aufweisen, wodurch sich die Logistik der Beutel optimieren lässt.

Auch bei der Entsorgung eines Beutels kann sich vorteilhaft ein geringeres Entsorgungsvolumen ergeben, sodass die Umwelt weniger beeinträchtigt wird.

Bevorzugt erstreckt sich das Beutelkonturschweißwerkzeug direkt angrenzend an die Aussparung normal zu den Kopflinien in Richtung einer Fußlinie.

### Begrifflich sei hierzu Folgendes erläutert:

Eine "Fußlinie" ist eine Linie einer Schweißnaht, die mit einem Schweißwerkzeug hergestellt worden ist und am Boden eines Beutels verläuft, wobei der Boden eines Beutels die untere Kante eines aufrecht stehend oder hängend positionierten Beutels darstellt, insbesondere eines offenen Beutels, dessen Öffnung oben ist.

So kann der Beutel derart gestaltet werden, dass die Schweißnaht zum Herstellen eines offenen Beutels nicht nur am Rand des Beutels verläuft, sondern sich im an die Öffnung des Beutels angrenzenden Bereich weiter ins Innere des Beutels erstreckt.

Bei einer geeigneten Gestaltung erstrecken sich die Öffnung des Beutels formierenden Schweißnähte parallel in Richtung der Fußlinie des Beutels.

Auf diese Weise kann sich eine Öffnung ergeben, die bei einer ideal dünnen Schweißnaht nicht nur eine Öffnungslinie aufweist, sondern eine Öffnungsfläche aufweist. Insbesondere kann die Öffnungsfläche rechteckig sein, sodass der Beutel bei einer geöffneten Öffnung mit einer zylindrischen oder elliptischen Füllnadel befüllt werden kann und die Schweißlinien im Bereich der Aussparung parallel zur Füllnadel verlaufen.

Zudem können diese die Öffnung formierenden Schweißlinien unter einem Winkel zueinander verlaufen, so dass sich eine trapezförmige Öffnungsfläche ergibt.

In einer besonders günstigen Ausführungsform sind die sich ins Innere des Beutels erstreckenden Schweißnähte so verlaufend, sodass der Beutel bei einer geöffneten Öffnung mit einer konischen Füllnadel befüllt werden kann und die Schweißlinien im Bereich der Aussparung parallel zur Füllnadel verlaufen.

Vorteilhaft kann hierdurch erreicht werden, dass mit dem hier beschriebenen Beutelkonturschweißwerkzeug hergestellt werden kann, der durch die Geometrie seiner Schweißnähte im Bereich der Öffnung des Beutels beim Befüllen des Beutels mit einer Füllnadel die Dichtheit der Verbindung zwischen Beutel und Füllnadel unterstützt.

Vorteilhaft kann hierdurch ebenfalls erreicht werden, dass weniger Luft beim Befüllen in den so hergestellten und befüllten Beutel eingeschlossen wird, wodurch sich das Packmaß befüllter Beutel optimieren lässt, wodurch die Logistik befüllter Beutel optimiert werden kann.

Optional erstreckt sich das Beutelkonturschweißwerkzeug ausgehend von der Aussparung unterhalb der Kopflinien in Form einer Schleife in Richtung der Ecken zwischen den Kopflinien und den Seitenlinien.

### Begrifflich sei hierzu Folgendes erläutert:

Eine "Schleife" ist als eine Schweißlinie zu verstehen, die in ihrer Mitte eine Bucht formt. Diese Bucht kann offen oder geschlossen sein.

Eine "Ecke" ist ein harmonischer oder disharmonischer Übergang zwischen einer Seitenlinie und einer Kopflinie oder zwischen einer Seitenlinie und einer Fußlinie.

Eine "Seitenlinie" ist eine Linie einer Schweißnaht, die mit einem Schweißwerkzeug hergestellt worden ist und an einer Seite eines Beutels verläuft, wobei die Seite eines Beutels die rechte oder linke Kante eines aufrecht stehend oder hängend positionierten Beutels darstellt, insbesondere eines offenen Beutels dessen Öffnung oben ist.

So ist beispielsweise die Herstellung eines Beutels mit einem entsprechenden Beutelkonturschweißgerät denkbar, dessen Schweißnähte sich im Bereich der Öffnung zunächst ins Innere des Beutels erstrecken und sich dann zu einer offenen Schleife in Richtung einer Kopflinie oder einer Seitenlinie oder einer Ecke fortsetzen.

Vorteilhaft kann hierdurch erreicht werden, dass die Spannungen im Bereich der Beutelöffnung beim Befüllen oder bei der Verwendung des Beutels im Allgemeinen derart durch die Schleifengeometrie der oberen Schweißlinie beeinflusst werden können, dass das Spannungsniveau im Material des Beutels reduziert werden kann.

Bevorzugt weist eine von der Schleife des Beutelkonturschweißwerkzeugs begrenzte Fläche eine geschlossene Umrandung auf.

### Begrifflich sei hierzu Folgendes erläutert:

Eine "Umrandung" ist als eine fortgesetzte Schweißlinie zu verstehen, die eine offene Bucht formt.

Eine "geschlossene Umrandung" ist als eine fortgesetzte Schweißlinie zu verstehen, die eine geschlossene Bucht formt.

So ist beispielsweise die Herstellung eines Beutels mit einem entsprechenden Beutelkonturschweißgerät denkbar, dessen Schweißnähte sich im Bereich der Öffnung zunächst ins Innere des Beutels erstrecken und dann eine geschlossene Schleife mit einer Kopflinie oder einer Seitenlinie oder mit einer Ecke des Beutels bilden.

In einer besonders vorteilhaften Ausführungsform ist ebenfalls denkbar, dass im Bereich der Bucht einer Schleife eine Befestigungsmöglichkeit für den Beutel vorgesehen werden kann, insbesondere eine Öse oder eine Aussparung der Folie in der Bucht, sodass der Beutel sehr einfach an dieser Öffnung aufrecht hängend befestigt werden kann.

Vorteilhaft kann hierdurch erreicht werden, dass die Spannungen im Bereich der Beutelöffnung beim Befüllen oder bei der Verwendung des Beutels im Allgemeinen derart durch die Schleifengeometrie der oberen Schweißlinie beeinflusst werden können, dass das Spannungsniveau im Material des Beutels reduziert werden kann.

Zudem kann sich vorteilhaft ergeben, dass der Beutel auf einfache Weise durch eine Öse oder eine Aussparung in der Folie im Bereich der Bucht befestigt aufrecht hängend werden kann.

Die Vorrichtung zum Befüllen eines Beutels, insbesondere eines Beutels der mit einem Beutelkonturschweißgerät hergestellt wurde kann eine Füllnadel aufweist.

Der Stand der Technik sah bislang vor, dass Beutel, insbesondere Beutel für medizinische Zwecke, mittels eines Füllports befüllt werden. Dieser Füllport ist ein spezifisches Einsetzteil, welches so mit dem Beutel verbunden ist, dass es nicht entfernt werden kann.

Insbesondere handelt es sich bei einem solchen Füllport um ein zunächst separates Bauteil, welches am Rand des Beutels in den Beutel eingeschweißt und so mit ihm fest verbunden ist.

Die WO 2007/140 760 A2 sowie die WO 2010/025699 A1 ofenbaren jeweils Vorrichtungen und Verfahren zum Einschweißen eines solchen Füllports in einen Beutel.

Abweichend wird hier vorgeschlagen einen Beutel nicht mehr mit einem Füllport zu befüllen, welcher als separates Bauteil in einen Beutel eingeschweißt ist.

So wird hier konkret vorgeschlagen einen Beutel mit einer Füllnadel durch eine Öffnung im Beutel zu befüllen, welche dadurch besteht, dass der Beutel nicht vollständig umlaufend verschweißt ist, sondern eine Aussparung in einer nahezu umlaufenden Verschweißung aufweist.

In einer besonders geeigneten Ausführungsform ist die Füllnadel so gestaltet, dass sie in eine Öffnung eines offenen Beutels eingeführt und anschließend der Beutel durch eine Bohrung im Inneren der Füllnadel befüllt werden können.

In einer weiteren besonderes geeigneten Ausführungsform sind die Füllnadel und eine Schweißlinie an der Öffnung eines Beutels derart korrespondierend in ihrer Gestalt ausgeführt, dass eine Abdichtung zwischen der Füllnadel, die in eine zur Füllnadel korrespondierende Öffnung eines offenen Beutels eingeführt ist, und dem Beutel erfolgen kann. Eine Abdichtung zwischen Füllnadel und Beutel kann also in dieser besonderes geeigneten Ausführungsform nur durch eine Anpassung der Kontur der Schweißlinie an die Gestalt der Füllnadel und/oder eine Anpassung der Gestalt der Füllnadel an den Verlauf der Schweißlinie erfolgen. So ist es beispielsweise möglich auf eine Klemmvorrichtung zu verzichten oder die Klemmvorrichtung muss nicht mehr speziell auf die Gestalt der Füllnadel und/oder der Öffnung des Beutels angepasst werden.

Vorteilhaft kann erreicht werden, dass Beutel keinen Füllport mehr aufweisen müssen um befüllt werden zu können. So können Material, Kosten und Verarbeitungszeit eingespart werden.

Ein weiterer Vorteil kann darin bestehen, dass die leeren Beutel ein geringeres Packmaß aufweisen, wodurch sich die Logistik der Beutel optimieren lässt.

Auch bei der Entsorgung eines Beutels kann sich vorteilhaft ein geringeres Entsorgungsvolumen ergeben, sodass die Umwelt weniger beeinträchtigt wird.

Ebenfalls kann hierdurch vorteilhaft erreicht werden, dass eine Abdichtung zwischen dem Beutel und der Füllnadel auch ohne entsprechend ausgeführte Klemmvorrichtung möglich ist.

Bevorzugt weist die Füllnadel einen Bereich mit einem in Erstreckungsrichtung der Füllnadel konstanten Querschnitt auf.

### Begrifflich sei hierzu Folgendes erläutert:

Eine "Erstreckungsrichtung" ist die Richtung, in der sich etwas vornehmlich erstreckt. Insbesondere meint eine Erstreckungsrichtung eine Richtung, in welcher sich die Füllnadel erstreckt, wobei die Erstreckungsrichtung diejenige Richtung meint, in der das Verformungswerkzeug nur geringförmige Änderungen in der Kontur aufweist. Insbesondere fällt die Erstreckungsrichtung mit der Achsrichtung Bohrung im Inneren der Füllnadel zusammen. Die Erstreckungsrichtung zeigt auf das Ende der Füllnadel, welches vor einem Befüllen des Beutels in den Beutel eingeführt wird.

So kann die Füllnadel einen zylindrischen oder einen elliptischen oder einen abweichenden Querschnitt mit einer Bohrung im Inneren aufweisen.

Vorteilhaft kann hierdurch erreicht werden, dass die Konturierung des zu befüllenden Beutels im Bereich der Öffnung des Beutels vergleichsweise einfach und kostengünstig gestaltet werden kann.

Optional weist die Füllnadel einen Bereich mit einem sich gegen die Erstreckungsrichtung der Füllnadel aufweitenden Querschnitt auf.

So kann die Füllnadel bei einer geeigneten Gestaltung die konische Geometrie eines Kegelstumpfes mit einer Bohrung im Inneren aufweisen.

Vorteilhaft kann hierdurch erreicht werden, dass sich eine Dichtung zwischen dem Beutel und der Füllnadel mit einer konischen Geometrie erreichen lässt, wodurch weniger Luft beim Befüllen in den Beutel eingeschlossen wird, wodurch sich das Packmaß befüllter Beutel optimieren lässt, wodurch die Logistik befüllter Beutel optimiert werden kann.

### Begrifflich sei zum Schweißwerkzeug Folgendes erläutert:

Ein "Schweißwerkzeug" ist eine Vorrichtung zum Verbinden von zwei Bauteilen durch eine Schweißnaht. Unter einem Schweißwerkzeug ist ein Werkzeug zu verstehen, welches eine Schweißelektrode aufweist, welche erhitzt wird und auf einen zu verschweißenden Bereich gedrückt wird. Insbesondere kann mit einem Schweißwerkzeug auch nur ein Bereich von zwei Bauteilen verbunden werden, insbesondere die Öffnung eines Beutels.

Eine "Schweißelektrode" ist ein Bauteil eines Schweißwerkzeugs, welches erhitzt gegen die zu verbindenden Bauteile gedrückt wird.

Eine "Oberflächenrelief" beschreibt die Oberflächenbeschaffenheit, insbesondere die Verteilung von Erhöhungen und Vertiefungen in einer Oberfläche sowie deren Unregelmäßigkeiten und Formen, insbesondere die Oberflächenbeschaffenheit einer Schweißelektrode.

Ein "geschlossener Beutel" ist ein Beutel, der an keiner Stelle eine Öffnung aufweist, durch die ein Gegenstand, insbesondere eine Flüssigkeit, aufgenommen oder abgegeben werden kann.

So ist konkret unter anderem denkbar, dass ein befüllter oder leerer offener Beutel mit einem Schweißwerkzeug derart verschweißt wird, dass der Beutel nicht länger offen, sondern geschlossen ist.

In einer besonders vorteilhaften Ausgestaltungsform des Schweißwerkzeuges ist es so möglich einen offenen Beutel luftdicht zu verschließen.

Ein Schweißwerkzeug zum Verschweißen einer Beutelöffnung kann ein prägnantes Oberflächenrelief aufweisen, welches ein Muster in der Schweißnaht oder der Schweißfläche ermöglicht.

Vorteilhaft kann erreicht werden, dass ein ohne Füllport befüllter Beutel nach dem Befüllen mit einem Schweißwerkzeug luftdicht verschlossen werden kann.

Bevorzugt weist das Oberflächenrelief der Schweißelektrode ein Schweißraster auf.

### Begrifflich sei hierzu Folgendes erläutert:

Ein "Schweißraster" ist als ein geometrischen Regeln folgendes Oberflächenrelief einer Schweißelektrode zu verstehen, welches eine derart prägnante Ausprägung besitzt, dass es als ein zurückbleibendes Muster in der Schweißnaht oder der Schweiß fläche wahrgenommen werden kann.

So kann ein Schweißraster beispielsweise eine durch Linien mit einer konstanten Erhöhung gebildetes Karoraster aufweisen.

Denkbar ist auch ein Muster, welches rautiert ist oder anderweitig an das Muster einer Waffel erinnert.

Vorteilhaft kann hierdurch erreicht werden, dass eine besonders dichte Verschweißung einer Öffnung eines zuvor geöffneten Beutels mit einer ein Schweißraster aufweisenden Schweißelektrode vorgenommen werden kann.

Ebenfalls kann hierdurch vorteilhaft erreicht werden, dass Flüssigkeit, welche in der Beutelöffnung im Bereich der Schweißverbindung zum Zeitpunkt der Schweißung vorherrscht zwischen den Rasterlinien eingeschlossen wird und dort verbleiben kann.

Optional ist das Schweißraster der Schweißelektrode geschlossen.

Ein geschlossenes Schweißraster weist abgeschlossene Hohlräume auf, sofern es gegen eine ebene Oberfläche gedrückt wird.

Ein Beispiel für ein geschlossenes Schweißraster ist ein Karoraster oder ein Waffelraster.

Vorteilhaft kann hierdurch erreicht werden, dass eine besonders dichte Verschweißung einer Öffnung eines zuvor geöffneten Beutels mit einer ein Schweißraster aufweisenden Schweißelektrode vorgenommen werden kann, welche auch gegen Versagen einen hervorragenden Schutz bietet. Sollte sich eine der Schweißnähte unvorhergesehen lösen, so weist der Beutel weiterhin keine erneute Öffnung auf, und es kann weiterhin noch keine Flüssigkeit aus dem Beutel austreten.

Bevorzugt ist das Schweißraster der Schweißelektrode offen.

Ein offenes Schweißraster ist als das Gegenteil eines geschlossenen Schweißrasters zu verstehen.

Ein Beispiel für ein offenes Schweißraster sind die inversen Formen eines Karorasters oder Waffelrasters.

Drückt man ein inverses Karoraster gegen eine ebene Oberfläche, so gibt es nur Punktberührungen zwischen dem offenen Schweißraster und der ebenen Oberfläche.

Eine besonders vorteilhafte Gestaltung eines offenen Schweißrasters ist ein offenes Schweißraster, welches mit einer Schweißlinie auf Höhe der Schweißpunkte so abgeschlossen ist, dass die Schweißlinie den Beutel in einer Linie verschließt und oberhalb dieser Linie die Rasterstruktur des Punktschweißrasters besteht.

Vorteilhaft kann hierdurch erreicht werden, dass in dem Fall, in welchem Flüssigkeit in der Beutelöffnung im Bereich der Schweißverbindung zum Zeitpunkt der Schweißung vorherrscht, diese durch das offene Raster nach außen dringen kann.

Vorteilhaft kann so erreicht werden, dass ein sehr schneller Durchlauf von Befüllen und Verschweißen stattfinden kann und nicht auf Flüssigkeitstropfen im Bereich der Verschweißung der Beutelöffnung geachtet werden muss.

Es sei ausdrücklich darauf hingewiesen, dass der Gegenstand des Schweißwerkzeugs mit den weiteren Aspekten der Erfindung vorteilhaft kombinierbar ist, und zwar sowohl einzeln oder in beliebiger Kombination kumulativ.

In einem Verfahren zum Befüllen eines Beutels mit einer Vorrichtung können die Klemmbacken den Beutel halten oder halten und transportieren, die Füllnadel im Bereich der Beutelöffnung zwischen eine erste Folie des Beutels und eine zweite Folie des Beutels eingeführt werden und der Beutel durch einen Kanal im Inneren der Füllnadel befüllt werden.

### Begrifflich sei zum Verfahren zum Befüllen eines Beutels mit einer Vorrichtung Folgendes erläutert:

Ein "Kanal" ist als eine Geometrie zu verstehen, durch welche ein Stoff strömen kann. In einem besonders einfachen Fall ist ein Kanal eine Bohrung im Inneren der Füllnadel.

Der Stand der Technik sah bislang vor, dass Beutel, insbesondere Beutel für medizinische Zwecke, mittels eines Füllports befüllt werden. Dieser Füllport ist ein spezifisches Einsetzteil, welches so mit dem Beutel verbunden ist, dass es nicht entfernt werden kann. Insbesondere handelt es sich bei einem solchen Füllport um ein zunächst separates Bauteil, welches am Rand des Beutels in den Beutel eingeschweißt und so mit ihm fest verbunden ist.

Die WO 2007/140 760 A2 sowie die WO 2010/025699 A1 ofenbaren jeweils Vorrichtungen und Verfahren zum Einschweißen eines solchen Füllports in einen Beutel.

Abweichend wird hier vorgeschlagen einen Beutel nicht mehr mit einem Füllport zu befüllen, welcher als separates Bauteil in einen Beutel eingeschweißt ist.

So wird hier konkret vorgeschlagen einen Beutel durch eine Öffnung im Beutel zu befüllen, welche dadurch besteht, dass der Beutel nicht vollständig umlaufend verschweißt ist, sondern eine Aussparung in einer nahezu umlaufenden Verschweißung aufweist.

Bei geeigneter Gestaltung dieser Aussparung kann eine Füllnadel im Bereich der Aussparung zwischen die den Beutel bildenden Folien oder Begrenzungswände eingeführt werden, sodass die Füllnadel einen Zugang zum Inneren des Beutels erhält. In einem zweiten Schritt wird der Beutel durch eine Klemme gegen die Füllnadel gespannt, sodass der Beutel nicht mehr von der Füllnadel abrutschen kann. Anschließend kann der Beutel durch die mit einer Bohrung durchdrungene Füllnadel befüllt werden.

So kann die Klemme den Beutel durch Form und Gegenform so gegen die Füllnadel klemmen, dass der Beutel mit Ausnahme der Bohrung im Inneren der Füllnadel dicht abgeschlossen ist.

Weiterhin ist dankbar, dass die Klemme im Zusammenspiel mit der Füllnadel und dem Beutel so dimensioniert und ausgelegt ist, dass der Beutel selbst als Dichtung zwischen der Klemme und dem Beutel fungiert.

Bei besonders geeigneter Gestaltung von Klemme und Füllnadel bildet sich ein Formschluss zwischen der Klemme und der Füllnadel oder zwischen der Klemme und dem Beutel und zwischen dem Beutel und der Füllnadel aus.

In einer geeigneten Ausführungsform kann es beim Einklemmen des Beutels zwischen der Klemme und der Füllnadel zu einer elastischen/oder plastischen Verformung des Beutels im Bereich der Beutelöffnung und/oder im Bereich der Klemmung kommen, wodurch die Eigenschaften der Klemme noch verbessert werden können. Eine solche Eigenschaft ist die Dichtheit der Klemmung, welche durch eine spezielle Formgebung der Dichtflächen an den Klemmbacken und/oder der Füllnadel verbessert werden kann.

Ebenfalls ist in einer geeigneten Ausführungsform denkbar, dass die Klemmbacken dazu genutzt werden die Beutel durch die Station oder die Anlage zu transportieren.

Vorteilhaft kann erreicht werden, dass Beutel keinen Füllport mehr aufweisen müssen um befüllt werden zu können. So können Material, Kosten und Verarbeitungszeit eingespart werden.

Ein weiterer Vorteil kann darin bestehen, dass die leeren Beutel ein geringeres Packmaß aufweisen, wodurch sich die Logistik der Beutel optimieren lässt.

Auch bei der Entsorgung eines Beutels kann sich vorteilhaft ein geringeres Entsorgungsvolumen ergeben, sodass die Umwelt weniger beeinträchtigt wird.

Vorteilhaft kann hierdurch ebenfalls erreicht werden, dass der Beutel beim Befüllen ein höheres Maß an Dichtheit aufweisen kann, sodass insbesondere weniger Luft in den befüllten Beutel eingeschlossen wird, wodurch sich das Packmaß befüllter Beutel optimieren lässt.

Bevorzugt werden die erste Folie des Beutels und die zweite Folie des Beutels vor dem Einführen der Füllnadel mit einem Vorformwerkzeug im Bereich der Beutelöffnung plastisch gedehnt.

### Begrifflich sei hierzu Folgendes erläutert:

Ein "Vorformwerkzeug" bezeichnet ein Werkzeug, welches zum Umformen einer Folie geeignet ist, insbesondere zum Verlängern einer Folie in zumindest einem Bereich der Folie.

Vorteilhaft kann hierdurch erreicht werden, dass die Füllnadel einfacher eingeführt werden und damit die Prozessdurchlaufzeit reduziert werden kann.

Optional werden die erste Folie des Beutels und die zweite Folie des Beutels vor dem Einführen der Füllnadel auseinandergezogen.

Vorteilhaft kann hierdurch erreicht werden, dass die Füllnadel einfacher eingeführt werden und damit die Prozessdurchlaufzeit reduziert werden kann.

Bevorzugt werden die erste Folie des Beutels und die zweite Folie des Beutels zwischen den Klemmbacken und/oder zwischen den Klemmbacken und der Füllnadel eingeklemmt.

Vorteilhaft kann hierdurch ebenfalls erreicht werden, dass der Beutel beim Befüllen ein höheres Maß an Dichtheit aufweisen kann, sodass insbesondere weniger Luft in den befüllten Beutel eingeschlossen wird, wodurch sich das Packmaß befüllter Beutel optimieren lässt.

Optional wird die Klemmwirkung durch einen zusätzlichen Druck auf den Formschluss erhöht.

Vorteilhaft kann hierdurch ebenfalls erreicht werden, dass der Beutel beim Befüllen ein höheres Maß an Dichtheit aufweisen kann, sodass insbesondere weniger Luft in den befüllten Beutel eingeschlossen wird, wodurch sich das Packmaß befüllter Beutel optimieren lässt.

Bevorzugt wirkt die eingeklemmte Folie als Dichtung zwischen den Klemmbacken und/oder zwischen den Klemmbacken und der Füllnadel.

Vorteilhaft kann hierdurch ebenfalls erreicht werden, dass die Folie als zusätzliches Dichtelement wirken kann und der Beutel beim Befüllen ein höheres Maß an Dichtheit aufweisen kann, sodass insbesondere weniger Luft in den befüllten Beutel eingeschlossen wird, wodurch sich das Packmaß befüllter Beutel optimieren lässt.

Optional wird die Füllnadel gegen die Klemmbacken gedrückt.

Vorteilhaft kann hierdurch ebenfalls erreicht werden, dass der Beutel beim Befüllen ein höheres Maß an Dichtheit aufweisen kann, sodass insbesondere weniger Luft in den befüllten Beutel eingeschlossen wird, wodurch sich das Packmaß befüllter Beutel optimieren lässt.

In dem Verfahren zum Befüllen eines Beutels mit einer Vorrichtung kann insbesondere zum Befüllen eines Beutels, der mit einem Beutelkonturschweißwerkzeug hergestellt wurde, der Beutel mit einem Transportsystem in Position gebracht werden, die Füllnadel im Bereich der Beutelöffnung zwischen eine erste Folie des Beutels und eine zweite Folie des Beutels eingeführt werden und der Beutel durch einen Kanal im Inneren der Füllnadel befüllt werden.

### Begrifflich sei hierzu Folgendes erläutert:

Ein "Transportsystem" ist jegliches System welches dazu geeignet und eingerichtet ist Beutel zu transportieren und zu positionieren.

Der Stand der Technik sah bislang vor, dass Beutel, insbesondere Beutel für medizinische Zwecke, mittels eines Füllports befüllt werden. Dieser Füllport ist ein spezifisches Einsetzteil, welches so mit dem Beutel verbunden ist, dass es nicht entfernt werden kann. Insbesondere handelt es sich bei einem solchen Füllport um ein zunächst separates Bauteil, welches am Rand des Beutels in den Beutel eingeschweißt und so mit ihm fest verbunden ist.

Die WO 2007/140 760 A2 sowie die WO 2010/025699 A1 ofenbaren jeweils Vorrichtungen und Verfahren zum Einschweißen eines solchen Füllports in einen Beutel.

Abweichend wird hier vorgeschlagen einen Beutel nicht mehr mit einem Füllport zu befüllen, welcher als separates Bauteil in einen Beutel eingeschweißt ist.

So wird hier konkret vorgeschlagen einen Beutel durch eine Öffnung im Beutel zu befüllen, welche dadurch besteht, dass der Beutel nicht vollständig umlaufend verschweißt ist, sondern eine Aussparung in einer nahezu umlaufenden Verschweißung aufweist.

Bei geeigneter Gestaltung dieser Aussparung kann eine Füllnadel im Bereich der Aussparung zwischen die den Beutel bildenden Folien oder Begrenzungswände eingeführt werden, sodass die Füllnadel einen Zugang zum Inneren des Beutels erhält. Anschließend kann der Beutel durch die mit einer Bohrung durchdrungene Füllnadel befüllt werden.

Vorteilhaft kann erreicht werden, dass Beutel keinen Füllport mehr aufweisen müssen um befüllt werden zu können. So können Material, Kosten und Verarbeitungszeit eingespart werden.

Ein weiterer Vorteil kann darin bestehen, dass die leeren Beutel ein geringeres Packmaß aufweisen, wodurch sich die Logistik der Beutel optimieren lässt.

Auch bei der Entsorgung eines Beutels kann sich vorteilhaft ein geringeres Entsorgungsvolumen ergeben, sodass die Umwelt weniger beeinträchtigt wird.

Bevorzugt werden die erste Folie des Beutels und die zweite Folie des Beutels vor dem Einführen der Füllnadel mit einem Vorformwerkzeug im Bereich der Beutelöffnung plastisch gedehnt.

Vorteilhaft kann hierdurch erreicht werden, dass die Füllnadel einfacher eingeführt werden und damit die Prozessdurchlaufzeit reduziert werden kann.

Optional werden die erste Folie des Beutels und die zweite Folie des Beutels vor dem Einführen der Füllnadel auseinandergezogen.

Vorteilhaft kann hierdurch erreicht werden, dass die Füllnadel einfacher eingeführt werden und damit die Prozessdurchlaufzeit reduziert werden kann.

Bevorzugt wird die Füllnadel gegen die Schweißung des Beutels gedrückt.

Vorteilhaft kann hierdurch ebenfalls erreicht werden, dass der Beutel beim Befüllen ein höheres Maß an Dichtheit aufweisen kann, sodass insbesondere weniger Luft in den befüllten Beutel eingeschlossen wird, wodurch sich das Packmaß befüllter Beutel optimieren lässt.

Optional wird die Füllnadel mit der Schweißung des Beutels verklemmt.

Vorteilhaft kann hierdurch ebenfalls erreicht werden, dass der Beutel beim Befüllen ein höheres Maß an Dichtheit aufweisen kann, sodass insbesondere weniger Luft in den befüllten Beutel eingeschlossen wird, wodurch sich das Packmaß befüllter Beutel optimieren lässt.

Bevorzugt wird die Füllnadel gegenüber der Schweißung des Beutels abgedichtet.

Vorteilhaft kann hierdurch ebenfalls erreicht werden, dass der Beutel beim Befüllen ein höheres Maß an Dichtheit aufweisen kann, sodass insbesondere weniger Luft in den befüllten Beutel eingeschlossen wird, wodurch sich das Packmaß befüllter Beutel optimieren lässt.

Optional wird die Füllnadel aus dem Beutel entfernt und die Öffnung des Beutels mit einem Schweißwerkzeug gemäß der vorliegenden Erfindung verschweißt oder verschweißt und verschlossen.

Vorteilhaft kann hierdurch erreicht werden, dass der Beutel nach dem Befüllen sofort verschweißt oder verschweißt und verschlossen werden kann, wodurch sich die Durchlaufzeiten reduzieren lassen und sichergestellt werden kann, dass keine Stoffe mehr aus dem Inneren des Beutels nach außen dringen.

Ein Verfahren zum Herstellen eines Beutels kann mit einem Beutelkonturschweißwerkzeug durchgeführt werden.

Es versteht sich, dass sich die Vorteile eines Beutelkonturschweißwerkzeugs wie vorstehend beschrieben unmittelbar auf ein Verfahren zum Herstellen eines Beutels erstrecken, der mit einem gattungsgemäßen Beutelkonturschweißwerkzeug hergestellt wird.

Der erfindungsgemäße Beutel ist mit einer erfindungsgemäßen Anlage hergestellt und befüllt, wobei eine Öffnung des Beutels mit einem erfindungsgemäßen Schweißwerkzeug verschweißt wird.

Mit der Anlage kann der Beutel mit dem Beutelkonturschweißgerät hergestellt und/oder mit der Vorrichtung befüllt und/oder mit dem Verfahren befüllt und/oder hergestellt werden.

Es versteht sich, dass sich die Vorteile eines Beutels, wobei der Beutel mit dem Beutelkonturschweißgerät hergestellt und/oder mit der Vorrichtung befüllt wird und/oder dessen Öffnung mit dem Schweißwerkzeug verschweißt wird und/oder mit dem Verfahren befüllt und/oder hergestellt wird, wie vorstehend beschrieben unmittelbar auf die Anlage zum Herstellen und Befüllen des Beutels, wobei der Beutel mit dem Beutelkonturschweißgerät hergestellt und/oder mit der Vorrichtung befüllt und/oder dessen Öffnung mit dem Schweißwerkzeug verschweißt und/oder mit dem Verfahren befüllt wird und/oder hergestellt wird, erstrecken.

Es sei ausdrücklich darauf hingewiesen, dass die Gegenstände der vorliegenden Erfindung vorteilhaft kombinierbar sind, und zwar sowohl einzeln oder in beliebiger Kombination kumulativ.

### Kurze Beschreibung der Figuren

Nachstehend wird die Erfindung anhand eines Ausführungsbeispiels unter Bezugnahme auf die Zeichnung näher erläutert. Dort zeigen
- Fig.1:: schematisch in perspektivischer Ansicht eine erste Ausführungsform einer Vorrichtung zum Befüllen eines medizinischen Beutels,
- Fig.2:: schematisch in perspektivischer Ansicht eine zweite Ausführungsform einer Vorrichtung zum Befüllen eines Beutels,
- Fig.3:: schematisch in perspektivischer Ansicht die Vorrichtung zum Befüllen eines Beutels aus Figur 1 oder 2, in geschlossenem Zustand,
- Fig.4:: schematisch in perspektivischer Ansicht eine Füllnadel und einen Beutel,
- Fig.5:: die Füllnadel und den Beutel aus Figur 4, mit in den Beutel eingeführter Füllnadel, und
- Fig.6:: schematisch in einer Ansicht einen Beutel mit einem Schweißraster sowie das Schweißraster in schematischer vergrößerter Detailansicht.

### Detaillierte Beschreibung der Ausführungsbeispiele

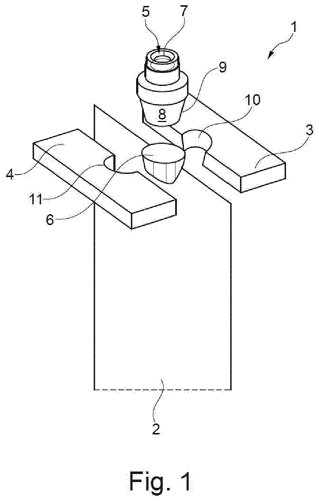

Die Vorrichtung 1 zum Befüllen des Beutels 2 in Fig.1 besteht im Wesentlichen aus einer ersten Klemmbacke 3, einer zweiten Klemmbacke 4 und einer Füllnadel 5.

Der Beutel 2 ist im Bereich einer Öffnung 6 bereits mit einem Vorformwerkzeug (nicht dargestellt) vorgedehnt.

Die Füllnadel 5 weist eine durchgehende Bohrung 7 auf, durch welche der Beutel 2 befüllt werden kann.

Ferner weist die Füllnadel 5 in einem Klemmbereich 8 eine äußere konusförmige Geometrie 9 auf.

Die Klemmbacken 3, 4 weisen jeweils invers zur Geometrie 9 des Klemmbereich 8 der Füllnadel 5 eine innere konusförmige Geometrie 10, 11 auf, welche dazu eingerichtet ist einen Formschluss (nicht dargestellt) mit der äußeren konusförmigen Geometrie 9 bilden zu können.

Der Beutel 2 kann als Dichtung zwischen dem Klemmbereich 8 der Füllnadel 5 und der konusförmigen Geometrie 10, 11 der Klemmbacken 3, 4 dienen.

Zum Befüllen des Beutels 2 wird der Beutel 2 zunächst von den Klemmbacken 3, 4 eingeklemmt. Anschließend wird die Füllnadel 5 in die vorgedehnte Öffnung 6 des Beutels 2 so eingeführt, dass ein Formschluss (nicht dargestellt) zwischen der Geometrie 9 und den Geometrien 10, 11 entsteht. Anschließend kann ein Stoff (nicht dargestellt) durch die Bohrung 7 der Füllnadel 5 in den Beutel 2 gefüllt werden.

Nach dem Befüllen des Beutels 2 wird die Füllnadel 5 aus dem Beutel 2 herausgezogen und der Beutel 2 wird anschließend abtransportiert, sodass die Vorrichtung 1 zum Befüllen des Beutels 2 für den nächsten Beutel (nicht dargestellt) frei wird.

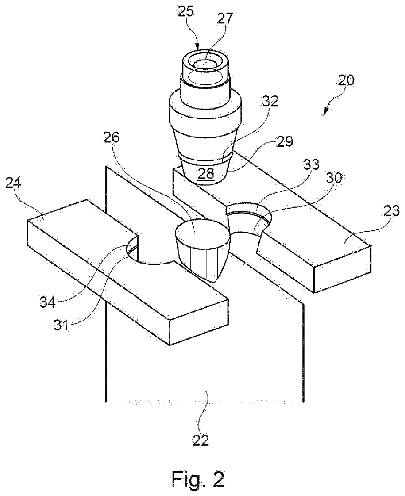

Die Vorrichtung 20 zum Befüllen eines Beutels 22 in Fig.2 besteht im Wesentlichen aus einer ersten Klemmbacke 23, einer zweiten Klemmbacke 24 und einer Füllnadel 25.

Der Beutel 22 ist im Bereich seiner Öffnung 26 bereits mit einem Vorformwerkzeug (nicht dargestellt) vorgedehnt.

Die Füllnadel 25 weist eine durchgehende Bohrung 27 auf, durch welche der Beutel 22 befüllt werden kann.

Ferner weist die Füllnadel 25 im Klemmbereich 28 eine konusförmige Geometrie 29 auf.

Die Klemmbacken 23, 24 weisen jeweils eine invers zur Geometrie 29 des Klemmbereich 28 der Füllnadel 25 eine konusförmige Geometrie 30, 31 auf, welche dazu eingerichtet ist einen Formschluss (nicht dargestellt) mit der Geometrie 29 bilden zu können.

Die Füllnadel 24 weist weiterhin eine Rille 32 auf. Damit diese Rille formschlüssig zu den Klemmbacken 23, 24 von oben in die Klemmbacken 23, 24 eingeführt werden kann, weisen die Klemmbacken 23, 24 jeweils eine zylindrische Geometrie 33, 34 auf, die es ermöglicht die Füllnadel 25 im geschlossenen Zustand (nicht dargestellt) der Klemmbacken 23, 24 von oben soweit einzuführen, dass der konusförmige Klemmbereich 28 einen Formschluss mit den konusförmigen Geometrien 30, 31 bilden kann.

Die Rille 32 der Füllnadel 25 unterstützt dabei die Dichtheit zwischen der Füllnadel 25, dem Beutel 22 und den Klemmbacken 23, 24.

Der Beutel 22 kann als Dichtung zwischen dem Klemmbereich 28 der Füllnadel 25 und der konusförmige Geometrie 30, 31 der Klemmbacken 23, 24 dienen.

Zum Befüllen des Beutels 22 wird der Beutel 22 zunächst von den Klemmbacken 23, 24 eingeklemmt. Anschließend wird die Füllnadel 25 in die vorgedehnte Öffnung 26 des Beutels 22 so eingeführt, dass ein Formschluss (nicht dargestellt) zwischen der Geometrie 29 und den Geometrien 30, 31 entsteht. Anschließend kann ein Stoff (nicht dargestellt) durch die Bohrung 27 der Füllnadel 25 in den Beutel 22 gefüllt werden.

Nach dem Befüllen des Beutels 22 wird die Füllnadel 25 aus dem Beutel 22 herausgezogen und der Beutel 22 wird anschließend abtransportiert, sodass die Vorrichtung 20 zum Befüllen des Beutels 22 für den nächsten Beutel (nicht dargestellt) frei wird.

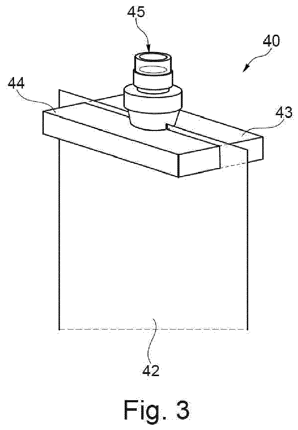

Die Vorrichtung 40 zum Befüllen eines Beutels 42 in Fig.3 weist im Wesentlichen eine erste Klemmbacke 43, eine zweite Klemmbacke 44 und einer Füllnadel 45 auf.

Die Vorrichtung 40 entspricht im Wesentlichen den vorstehend beschriebenen Vorrichtungen 1, 20 und befindet sich im geklemmten Zustand, in welchem der Beutel 42 befüllt werden kann.

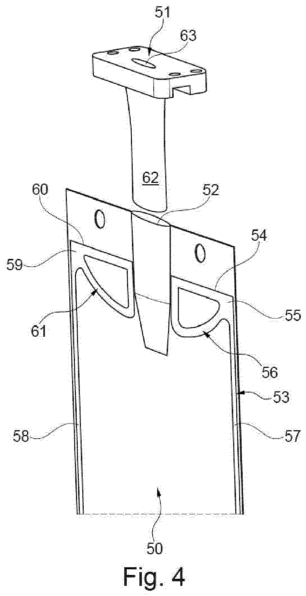

Der Beutel 50 und die Füllnadel 51 in Fig.4 sind so gestaltet, dass die Füllnadel 51 zum Befüllen des Beutels 50 verwendet werden kann.

Der Beutel 50 ist dazu im Bereich seiner Öffnung 52 mit einem Vorformwerkzeug (nicht dargestellt) vorverformt, sodass die Füllnadel 51 einfach in den Beutel 50 eingeführt werden kann.

Der Beutel 50 weist eine Schweißnaht 53 bestehend aus einer ersten Kopflinie 54, einer ersten oberen Ecke 55, einer ersten geschlossenen Schleife 56, einer ersten Seitenlinie 57, einer ersten unteren Ecke (nicht dargestellt), einer Fußlinie (nicht dargestellt), einer zweiten unteren Ecke (nicht dargestellt) einer zweiten Seitenlinie 58, einer zweiten oberen Ecke 59, einer zweiten Kopflinie 60 und einer zweiten geschlossenen Schleife 61 auf.

Die Füllnadel 51 weist einen Bereich mit einer elliptischen Geometrie 62 und eine Bohrung 63 auf, durch welche der Beutel 50 befüllt werden kann.

Zum Befüllen des Beutels 50 wird die Füllnadel 51 in die vorverformte Öffnung 52 des Beutels 50 eingeführt. Anschließend wird ein Stoff durch die Bohrung 63 der Füllnadel 51 in den Beutel 50 gefüllt.

Nach dem Befüllen des Beutels 50 wird die Füllnadel 51 aus dem Beutel 50 herausgezogen und der Beutel 50 wird anschließend abtransportiert, sodass die Füllnadel 51 zum Befüllen des Beutels 50 für den nächsten Beutel (nicht dargestellt) frei wird.

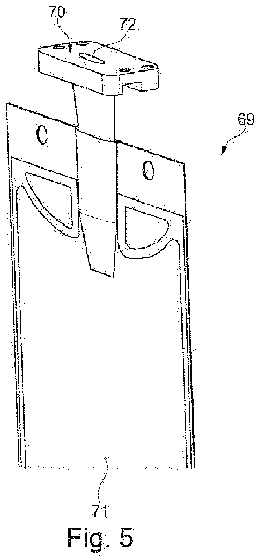

Die Vorrichtung 69 zum Befüllen eines Beutels 71 in Fig.5 besteht im Wesentlichen aus einer Füllnadel 70 und einem Beutel 71.

Die Füllnadel 70 ist in den Beutel 71 eingeführt, sodass der Beutel 71 durch die Bohrung 72 in der Füllnadel 70 befüllt werden kann.

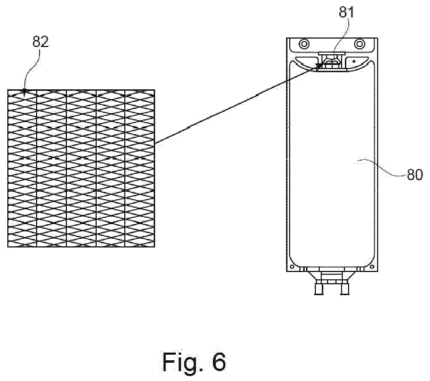

Der Beutel 80 in Fig.6 ist befüllt und im Bereich 81 seiner Öffnung (nicht dargestellt) mit einem Schweißwerkzeug (nicht dargestellt) verschweißt. Das Schweißwerkzeug (nicht dargestellt) weist dabei das geschlossene Schweißraster 82 auf, mit welchem der Beutel 80 im Bereich 81 seiner Öffnung (nicht dargestellt) dicht verschweißt wurde.

### Liste der verwendeten Bezugszeichen

- 1: Vorrichtung
- 2: Beutel
- 3: Erste Klemmbacke
- 4: Zweite Klemmbacke
- 5: Füllnadel
- 6: Öffnung
- 7: Bohrung
- 8: Klemmbereich
- 9: Geometrie
- 10: Geometrie
- 11: Geometrie
- 20: Vorrichtung
- 22: Beutel
- 23: Klemmbacke
- 24: Klemmbacke
- 25: Füllnadel
- 26: Öffnung
- 27: Bohrung
- 28: Klemmbereich
- 29: Geometrie
- 30: Geometrie
- 31: Geometrie
- 32: Rille
- 33: Geometrie
- 34: Geometrie
- 40: Vorrichtung
- 42: Beutel
- 43: Klemmbacke
- 44: Klemmbacke
- 45: Füllnadel
- 50: Beutel
- 51: Füllnadel
- 52: Öffnung
- 53: Schweißnaht
- 54: Kopflinie
- 55: Ecke
- 56: Schleife
- 57: Seitenlinie
- 58: Seitenlinie
- 59: Ecke
- 60: Kopflinie
- 61: Schleife
- 62: Geometrie
- 63: Bohrung
- 69: Vorrichtung
- 70: Füllnadel
- 71: Beutel
- 72: Bohrung
- 80: Beutel
- 81: Bereich
- 82: Schweißraster

## Patentansprüche

1. Schweißwerkzeug zum luftdichten Verschweißen einer Öffnung (6, 26, 52) eines Beutels (2, 22, 42, 50, 71, 80) für medizinische Zwecke, wobei das Schweißwerkzeug eine Schweißelektrode aufweist, wobei die Schweißelektrode ein Oberflächenrelief aufweist.

2. Schweißwerkzeug nach Anspruch 1,
***dadurch gekennzeichnet, dass***
das Oberflächenrelief der Schweißelektrode ein Schweißraster (82) aufweist.

3. Schweißwerkzeug nach Anspruch 2,
***dadurch gekennzeichnet, dass***
das Schweißraster (82) der Schweißelektrode geschlossen ist, indem es abgeschlossene Hohlräume aufweist, sofern es gegen eine ebene Oberfläche gedrückt wird.

4. Schweißwerkzeug nach Anspruch 3,
***dadurch gekennzeichnet, dass***
das geschlossene Schweißraster (82) ein durch Linien mit einer konstanten Erhöhung gebildetes Karomuster aufweist, oder rautiert ist oder an das Muster einer Waffel erinnert.

5. Schweißwerkzeug nach Anspruch 2,
***dadurch gekennzeichnet, dass***
das Schweißraster (82) der Schweißelektrode offen ist, indem es nur Punktberührungen zwischen dem offenen Schweißraster und einer ebenen Oberfläche gibt.

6. Schweißwerkzeug nach Anspruch 5,
***dadurch gekennzeichnet, dass***
das offene Schweißraster (82) eine Form eines inversen Karomusters oder eines inversen Waffelmusters besitzt.

7. Schweißwerkzeug nach einem der Ansprüche 5 oder 6,
***dadurch gekennzeichnet, dass***
das offene Schweißraster (82) mit einer Schweißlinie auf Höhe der Punktberührungen so abgeschlossen ist, dass die Schweißlinie den Beutel (2, 22, 42, 50, 71, 80) in einer Linie verschließt und oberhalb dieser Linie eine Rasterstruktur des offenen Schweißrasters besteht.

8. Schweißwerkzeug nach einem der Ansprüche 2 bis 7,
***dadurch gekennzeichnet, dass***
das Schweißraster (82) eine geeignete Ausprägung besitzt, um als zurückbleibendes Muster in der Schweiß fläche des Beutels (2, 22, 42, 50, 71, 80) wahrgenommen zu werden.

9. Schweißwerkzeug nach einem der voranstehenden Ansprüche,
***dadurch gekennzeichnet, dass***
das Schweißwerkzeug dazu ausgestaltet ist, den Beutel (2, 22, 42, 50, 71, 80) luftdicht zu verschließen.

10. Anlage zum Herstellen und Befüllen eines Beutels (2, 22, 42, 50, 71, 80), wobei eine Öffnung (6, 26, 52) des Beutels (2, 22, 42, 50, 71, 80) mit einem Schweißwerkzeug nach einem der Ansprüche 1 bis 9 verschweißt wird.

11. Anlage nach Anspruch 10,
***dadurch gekennzeichnet, dass***
die Anlage ein Beutelkonturschweißwerkzeug zum Verschweißen einer Folie zu einem offenen Beutel (2, 22, 42, 50, 71, 80) umfasst, wobei das Beutelkonturschweißwerkzeug zwischen zwei Kopflinien (54, 60) eine Aussparung aufweist.

12. Anlage nach Anspruch 10,
***dadurch gekennzeichnet, dass***
sich das Beutelkonturschweißwerkzeug direkt angrenzend an die Aussparung normal zu den Kopflinien (54, 60) in Richtung einer Fußlinie erstreckt, bevorzugt erstreckt sich das Beutelkonturschweißwerkzeug ausgehend von der Aussparung unterhalb der Kopflinien (54, 60) in Form einer Schleife (56, 61) in Richtung der Ecken (55, 59) zwischen den Kopflinien (54, 60) und den Seitenlinien (57, 58), besonders bevorzugt weist eine von der Schleife (56) des Beutelkonturschweißwerkzeugs begrenzte Fläche eine geschlossene Umrandung auf.

13. Beutel (2, 22, 42, 50, 71, 80), der mit einer Anlage nach einem der Ansprüche 10 bis 12 hergestellt und befüllt ist.

14. Verfahren zum Befüllen eines Beutels (2, 22, 42, 50, 71, 80) mit einer Vorrichtung (1, 40, 69), die eine Klemme mit zwei Klemmbacken (3, 4, 23, 24, 43, 44) und eine Füllnadel (5, 45, 70) aufweist, wobei die Klemme dazu eingerichtet ist, den Beutel (2, 22, 42, 50, 71, 80) zwischen der Füllnadel (5, 45, 70) und den Klemmbacken (3 , 4, 23, 24, 43, 44) einzuklemmen, die Klemmbacken (3 , 4, 23, 24, 43, 44) den Beutel (2, 22, 42, 50, 71, 80) halten oder halten und transportieren, die Füllnadel (5, 45, 70) im Bereich einer Beutelöffnung zwischen eine erste Folie des Beutels (2, 22, 42, 50, 71, 80) und eine zweite Folie des Beutels (2, 22, 42, 50, 71, 80) eingeführt wird und der Beutel (2, 22, 42, 50, 71, 80) durch einen Kanal im Inneren der Füllnadel (5, 45, 70) befüllt wird, wobei die Füllnadel (5, 45, 70) aus dem Beutel (2, 22, 42, 50, 71, 80) entfernt und eine Öffnung (6, 26, 52) des Beutels (2, 22, 42, 50, 71, 80) mit einem Schweißwerkzeug nach einem der Ansprüche 1 bis 9 verschweißt oder verschweißt und verschlossen wird.

15. Verfahren nach Anspruch 14, wobei eine Schweißelektrode des Schweißwerkzeugs auf einen zu verschweißenden Bereich (81) gedrückt wird, um nur die Öffnung (6, 26, 52) des Beutels (2, 22, 42, 50, 71, 80) miteinander zu verbinden.
